# EUROPÄISCHE PATENTSCHRIFT

(11) **EP 2 653 736 B1**
(45) Veröffentlichungstag und Bekanntmachung des Hinweises auf die Patenterteilung: **02.05.2018**
(21) Anmeldenummer: 13161331.7
(22) Anmeldetag: 27.03.2013
(51) Int. Cl.: F16C 17/06, F16C 33/06, F04D 29/057, F04D 29/047

(54) **Lagersegment, Trägerkörper, Lageranordnung sowie Pumpe**
Bearing segment, holder, bearing assembly and pump
Segment de palier, corps de support, agencement de palier et pompe

(30) Priorität: 18.04.2012 EP 12164627
(43) Veröffentlichungstag der Anmeldung: 23.10.2013
(73) Patentinhaber: Sulzer Management AG, 8401 Winterthur (CH)
(72) Erfinder: Gassmann, Simon, 8051 Zürich (CH); Meuter, Paul, 8472 Seuzach (CH); Felix, Thomas, 8126 Zumikon (CH)
(74) Vertreter: Intellectual Property Services GmbH

(56) Entgegenhaltungen:
- EP-A2- 0 752 538
- DE-C- 853 990
- FR-A- 540 027
- FR-A- 554 735
- GB-A- 1 219 572
- GB-A- 1 535 165
- US-A- 3 829 180
- US-A- 4 077 682
- US-A- 4 456 391
- US-A1- 2006 063 442
- US-A1- 2010 215 299
- US-A1- 2010 260 451

## Beschreibung

Die Erfindung betrifft ein Lagersegment, umfassend einen Segmentkörper und ein Kippelement, für einen Trägerkörper einer Lageranordnung zur Aufnahme eines Axialschubs, einen Trägerkörper einer Lageranordnung, eine Lageranordnung sowie eine Pumpe gemäss dem Oberbegriff der Ansprüche 1, 10, 13 und 14. Lager kommen überall dort zur Anwendung, wo Kräfte, die in bestimmte Richtungen wirken, kompensiert bzw. Bewegungen eines Objektes in die unerwünschten Richtungen verhindert werden müssen. In Pumpen werden hierbei im Wesentlichen zwei Arten von Lagern verwendet, Radial- und Axiallager.
Zur Aufnahme axialer Kräfte werden meist axiale Kippsegmentlager verwendet, deren Aufbau aus dem Stand der Technik bekannt ist. Das allgemeine Konstruktionsprinzip sieht vor, dass in einem axialen Kippsegmentlager mehrere Lagersegmente in Form einer ringförmigen Gruppierung auf einem meist metallischen Trägerkörper um eine Lagerachse angeordnet sind und mit einem zirkulierenden Fluid als Schmiermittel geflutet werden. Die Lagersegmente als solche bestehen, in Abhängigkeit von der Anwendung, aus einem Metall, Kunststoff etc. und haben die Form eines trapezförmigen Quaders, auf dessen dem Trägerkörper zugewandter Seite sich ein Kippelement befindet, auf welchem das Lagersegment gelagert ist. Auf der dem Trägerkörper abgewandten Seite der Lagersegmente befindet sich eine Spurscheibe, mit welcher die axialen Kräfte der Welle auf das Lager übertragen werden, wodurch entsprechende Drucklasten auf die Lagersegmente wirken.

Beginnt sich die Spurscheibe zu drehen, kommt es zwischen der Spurscheibe und den Lagersegmenten zur Scherung des Fluids und die Spurscheibe gleitet über die Lagersegmente hinweg. Die Ausbildung eines keilförmigen hydrodynamischen Schmiermittelfilms, der wesentlicher Bestandteil im Betrieb der axialen Lagerordnung ist, führt zu einem Kippen jedes Lagersegmentes, da diese auf einem Kippelement getragen werden. Besonders kritische Betriebsbereiche für die axialen Kippsegmentlager sind die Anlauf- und Stopphase, beispielsweise bei Pumpen, da hierbei teilweise sehr hohe axiale Kräfte wirken. In diesen Phasen hat sich der hydrodynamische Schmiermittelfilm noch nicht vollständig ausgebildet, sodass sich Spurscheibe und Lagersegment direkt, ohne wesentliche hydrodynamische Schmierung berühren und es zum Verschleiss kommt.

Im Allgemeinen sind die Lagersegmente lose und diskret in Bezug auf den Trägerkörper montiert, um Fehlausrichtungen zu vermeiden und das Kippen der Lagersegment, was durch die Ausbildung des hydrodynamischen Schmiermittelfilms bewirkt wird, der drehenden Welle anzupassen. Die lose Montierung ist hierbei prinzipiell dadurch beschränkt, dass die Lagersegmente innerhalb der Anordnung zu halten sind, wenn die Welle sich nicht dreht, also beispielsweise dadurch, das die Lagersegmente durch ein flexibles Netz miteinander verbunden sind oder mittels eines Befestigungsmittels in einer Nut am Trägerkörper befestigt sind.

Aus dem Stand der Technik sind Lagersegmente bekannt, die aus einer Einheit mit einem Segmentkörper und einem Kippelement bestehen und, wie bereits beschrieben, der Segmentkörper die Form eines trapezförmigen Quaders aufweist. Mit dem sich auf der dem Trägerkörper zugewandten Fläche des Lagersegments befindenden Kippelement wird das Lagersegment auf dem Trägerkörper gelagert, wobei eine bevorzugte Kippachse in radiale Richtung der Lagerachse liegt.

Auch sind verschiedenste Materialien aus dem Stand der Technik bekannt, aus welchen die Lagersegmente hergestellt werden. Gewöhnlich werden die Lagersegmente aus Metall, beispielsweise Stahl oder Weissmetall, hergestellt und, falls für die Anwendung benötigt, mit einem Material, z.B. dem Kunststoff Polyetherketone, insbesondere Polyetheretherketone (PEEK) beschichtet. Da dies sehr aufwändig ist, werden häufig einstückige, z.B. vollständig aus PEEK hergestellte Lagersegmente verwendet, die zwar den Vorteil einer höheren Verformbarkeit und dadurch eine bessere Lastverteilung (und damit höhere zulässige spezifische Drucklasten) haben, aber den Nachteil aufweisen, dass das Material im Bereich der Kippelemente zu fliessen beginnen kann, sich also plastisch verformt.

In Abhängigkeit von der Einsatzumgebung werden teilweise Fluide mit einer niedrigen Viskosität eingesetzt, beispielsweise ein wasserbasiertes Schmiermittel beziehungsweise ein Öl-Wasser-Gemisch mit einem hohen Wasseranteil. In diesem Fall ist der Verschleiss der Lagersegmente kein stetiger Prozess, sondern es kommt bei hohen Drucklasten oft innerhalb von Sekunden zur Beschädigung oder Zerstörung der Lagersegmente. Aus diesem Grund werden Lagersegmente aus anderen Materialien eingesetzt, beispielsweise Lagersegmente aus keramischen Materialien oder thermoplastischem Kunststoff. Keramische Materialien, sind hart, aber brüchig, haben aber den Vorteil, dass diese in Umgebungen mit einem Schmiermittel mit niedriger Viskosität eingesetzt werden können. Es gibt jedoch praktische Nachteile beim Einsatz keramischer Materialien, diese erfordern oft zusätzliche Herstellungsschritte, welche bei keramischen Materialien aufwändig sind, und beschädigen beziehungsweise zerstören, wenn die Lagersegmente aufgrund der Brüchigkeit in mehrere Teile zerfallen, meistens das ganze Lager. Lagersegmenten aus thermoplastischem Kunststoff hingegen weisen zwar eine höhere Elastizität und eine geringere Brüchigkeit auf, wodurch diese höhere Drucklasten aufnehmen können. Allerdings haben diese den Nachteil, dass das Material bei übermässiger Belastung an den Kippelementen, wie bereits erwähnt, zu fliessen beginnt.

Aus der DE 698 14 620 ist eine Anordnung für ein axiales Kippsegmentlager bekannt, bei welchem Federelemente vorgesehen sind, auf welchen die Kippelemente der Lagersegmente gelagert sind und die hohe Drucklasten beim Anfahren kompensieren können. Die Lagersegmente werden hierbei an einem Trägerkörper angeordnet der mindestens zwei ringförmigen axial biegbare Federelemente umfasst, die jeweils von einer benachbarten ringförmigen Oberfläche durch eine zugeordnete kreisförmige Gruppierung von Biegegelenken beabstandet wird. Die Gelenke sind hierbel jeweils zwischen den Kippelementen benachbarter Lagersegmente angeordnet und wirken als Ansatzpunkt zur Federbiegung. Nachteil dieser Lösung ist der hohe konstruktive und fertigungstechnische Aufwand, da die Komplexität der Anordnung, im Vergleich zu gewöhnlichen axialen Kippsegmentiagern um ein Vielfaches erhöht ist.

Aus der DE 853 990 ist ein Längslager mit kippbaren Lagersegmenten zur Aufnahme der Lageriast einer Gegeniaufscheibe bekannt. Die Lagersegmente sind an einer Unterstützungsrolle auf einer Lagerplatte angeordnet.

Aufgabe der Erfindung ist es daher, Lagersegmente mit einfachem konstruktivem Design bereitzustellen, die zur einfachen und kosteneffektiven Herstellung geeignet sind und die gleichzeitig in axialen Lageranordnung zur Aufnahme hoher Drucklasten eingesetzt werden können, wobei die aus dem Stand der Technik bekannten schädlichen Wirkungen vermieden werden.

Die diese Aufgabe lösenden Gegenstände der Erfindung sind durch die Merkmale der Ansprüche 1, 10, 13 und 14 gekennzeichnet. Die abhängigen Ansprüche beziehen sich auf besonders vorteilhafte Ausführungsformen der Erfindung.

Erfindungsgemäss wird also ein Lagersegment, umfassend einen Segmentkörper und ein Kippelement, für einen Trägerkörper einer Lageranordnung zur Aufnahme eines Axialschubs vorgeschlagen. Das Kippelement ist in einer in eine radiale Richtung verlaufenden langgestreckten Vertiefung des Segmentkörpers derart vorgesehen, dass ein in Richtung der Vertiefung verlaufender Kontaktkörper des Kippelements über eine Oberfläche des Segmentkörpers hinausragt und der Segmentkörper eine höhere Verformbarkeit als das Kippelement hat.

Wesentlich für die Erfindung ist somit, dass das Lagersegment ein Kippelement hat, das in einer Vertiefung im Segmentkörper vorgesehen ist, das Kippelement einen Kontaktkörper hat, der über eine Oberfläche des Segmentkörpers hinausragt, und die Verformbarkeit des Segmentkörpers höher ist als die des Kippelements. Vorteil dieses Aufbaus ist, dass das Kippelement durch die Anordnung in der Vertiefung die anliegenden Kräfte besser auf den Segmentkörper übertragen kann beziehungsweise mit höheren Drucklasten belastet werden kann. Ausserdem ist es aufgrund der Erfindung erstmals möglich, Materialien mit unterschiedlicher Verformbarkeit, die für die Komponenten vorteilhaften Materialeigenschaften zu selektieren, sodass das Lagersegment an die Anforderungen des jeweiligen Ausführungsbeispiels angepasst wird. Dadurch wird es möglich Lagersegmente in einem einfachen konstruktiven Design auszuführen, mit bestehenden effizienten Fertigungsverfahren herzustellen und gleichzeitig das Anwendungsspektrum aufgrund der unterschiedlichen Materialeigenschaften eines erfindungsgemässen Lagersegments zu erweitern.

Sinngemäss noch einmal mit anderen Worten ist das Wesentliche an der Erfindung, dass das Lagersegment zwei unterschiedliche Materialien für den Trägerkörper und für das Kippelement umfasst und damit der Vorteil der hohen Verformbarkeit des Trägerkörpers mit dem Vorteil des "Nicht-Fliessens" des Kippelements kombiniert wird.

Ausserdem ist es somit möglich Lagersegmente für verschiedenste Anwendungsgebiete durch die Verwendung verschiedener Kippelemente in Massen zu produzieren. Hierzu ist lediglich das Material, aus welchem die Kippelemente hergestellt werden, zu ändern, was insbesondere in Bezug auf die Wirtschaftlichkeit vorteilhaft ist.

Da der Segmentkörper eine höhere Verformbarkeit als das Kippelement hat, ist es möglich Segmentkörper mit einer hohen Verformbarkeit, zu verwenden und gleichzeitig das Kippelement aus einem anderen Material, einem Material das eine geringe Verformbarkeit aufweist, auszuführen. Durch diese Massnahme kann der Segmentkörper eine hohe Drucklast kompensieren und das Kippelement hohe Drucklasten übertragen, ohne zu fliessen.
Ein weiterer Vorteil ist, dass die Kräfte aufgrund der grösseren Fläche der Vertiefung auf eine grössere Fläche verteilt und dadurch die Drucklasten kleiner werden, wodurch die Materialbelastung des Lagersegments deutlich verringert wird. Besteht der Segmentkörper zusätzlich aus einem Material mit einer höheren Verformbarkeit, dann wird dieser durch die anliegende Drucklast lediglich elastisch verformt. Es ist leicht ersichtlich, dass aufgrund dieser Massnahme der Verschleiss reduziert beziehungsweise die Lebensdauer eines Lagersegments und somit die Wirtschaftlichkeit signifikant erhöht werden.
Vorzugsweise ist das Lagersegment, umfassend den Segmentkörper und das Kippelement, ein zweiteiliges Lagersegment. Dieses bevorzugte Ausführungsbeispiel ermöglicht es das Lagersegment als zwei oder mehreren unabhängige Komponenten umfassendes Lagersegment auszuführen. Aufgrund der Trennung der Komponenten, also in Komponenten die aus Materialien mit unterschiedlicher Verformbarkeit bestehen, ist es möglich die Materialeigenschaften effizient zu kombinieren. Aufgrund der einfachen Designmerkmale des Segmentkörpers und des Kippelements können somit bekannte Herstellverfahren angewendet werden, wobei sich erstmals zweiteilige Lagersegmenten besonders einfach und flexibel herstellen lassen. Zusätzlich wird der Austausch von Verschleissteilen aufgrund der vorliegenden konstruktiven Lösung vereinfacht.

Ferner ist es vorteilhaft, dass das Kippelement des Lagersegments aus einem Metall ist. Da die erfindungsgemässen Lagersegmente beispielsweise in Pumpen mit niedrigviskosen Schmiermitteln verwendet werden und in diesem Bereich Kippelemente mit einer geringen plastischen Verformbarkeit, gleichzeitig aber die Segmentkörper Komponenten mit einer hohen elastischen Verformbarkeit sein müssen, ist das erfindungsgemässe Lagersegmente mit einem Kippelement aus Metall und einem Segmentkörper aus einem anderen Material ausführbar.

Als spezielle Massnahme wird eine Kontaktfläche des Kontaktkörpers beschichtet, insbesondere keramisch beschichtet. Durch diese Massnahme wird der Verschleiss der Kontaktfläche, welche im Einbau- und Betriebszustand mit dem Trägerkörper kontaktiert und einen Bereich mit extremer Belastung ist, vorteilhaft reduziert.

Im Hinblick auf die Eigenschaft des Kippens ist es vorteilhaft den Kontaktkörper des Lagersegments derart auszugestalten, sodass dieser im Einbauzustand um eine Kippachse beweglich an dem Trägerkörper anordenbar ist. Als bevorzugte Massnahme ist die Kippachse in der radialen Richtung angeordnet. Eine weitere vorteilhafte Massnahme und bevorzugte Ausführung sieht vor, dass ein Querschnitt des Kontaktkörpers konvex gewölbt, insbesondere mehreckig ist.

Es ist leicht einsichtig, dass der Kontaktkörper des Lagersegments derart ausgestaltet sein muss, sodass das Lagersegment im Einbauzustand, also die am Trägerkörper angeordneten Lagersegmente, um eine Kippachse kippen. Die Kippsachse, um welche das Lagersegment gekippt wird, verläuft in radiale Richtung, also in Richtung der Vertiefung. Diese radiale Richtung entspricht im Einbauzustand vorteilhaft der radialen Richtung der Lagerachse, sodass die Kippelemente der Lagersegmente automatisch in die bevorzugte Richtung ausgerichtet sind. Erfindungsgemäß ist das Material aus welchem der Segmentkörper ist, ein thermoplastischer Kunststoff, insbesondere ein Polyetherketon, die im Speziellen auch die Polyetheretherketone enthalten. In einem Ausführungsbeispiel nicht Teil der Erfindung ist das Material, aus welchem der Segmentkörper ist, ein faserverstärkten Verbundwerkstoff. Vorteilhaft können somit, insbesondere in Kombination mit Kippelementen aus Metall, vollkommen neue Ausführungsformen an Lagersegmenten hergestellt werden, die im Vergleich zu Lagersegmenten, welche aus dem Stand der Technik bekannt sind, hohe Drucklasten aufnehmen können, ohne Verschleisserscheinungen zu zeigen.
Der Querschnitt der Vertiefung im Segmentkörper des Lagersegments ist bevorzugt mehreckig, insbesondere viereckig, ausgebildet und/oder das Kippelement ist in der Vertiefung des Segmentkörpers mit einem Befestigungsmittel befestigt. In der Praxis erfolgt die Befestigung des Kippelement in der Vertiefung beispielsweise mittels verrasten, klippsen oder kleben oder aber mittels verspannen, einpressen beziehungsweise verschrauben.
Die Erfindung betrifft weiter einen Trägerkörper einer Lageranordnung zur Aufnahme eines Axialschubs mit einem Lagersegment. In einem besonders bevorzugten Ausführungsbeispiel ist der Trägerkörper um eine Lagerachse anordenbar, insbesondere ringförmig anordenbar und/oder eine Mehrzahl von Lagersegmenten sind am Trägerkörper angeordnet, insbesondere ringartig angeordnet.
Im Weiteren betrifft die Erfindung eine Lageranordnung mit einem Trägerkörper und einem Lagersegment.

Die Erfindung betrifft schliesslich auch eine Pumpe mit einer Lageranordnung, einem Trägerkörper und einem Lagersegment.

Im Folgenden wird die Erfindung an Hand der Zeichnung näher erläutert. Es zeigen in schematischer Darstellung:
- Fig. 1a: ein erfindungsgemässes Lagersegment;
- Fig. 1b: einen Querschnitt entlang der Schnittlinie I-I gemäss Fig. 1a;
- Fig. 2a: ein erfindungsgemässes Kippelement;
- Fig. 2b: das erfindungsgemässe Kippelement der Fig. 2a in perspektivischer Darstellung;
- Fig. 3a: ein erfindungsgemässes Lagersegment mit einer Vertiefung;
- Fig. 3b: einen Querschnitt durch das erfindungsgemässes Lagersegment der Fig. 3a;
- Fig. 4: einen erfindungsgemässen Trägerkörper mit einer Vielzahl von Lagersegmenten;
- Fig. 5: eine Seitenansicht gem. Fig. 4 aus Richtung D auf den erfindungsgemässen Trägerkörper mit einer Anordnung von Lagersegmenten;
- Fig. 6: eine schematische Darstellung eines Ausführungsbeispiels einer Pumpe mit einer erfindungsgemässen Lageranordnung.

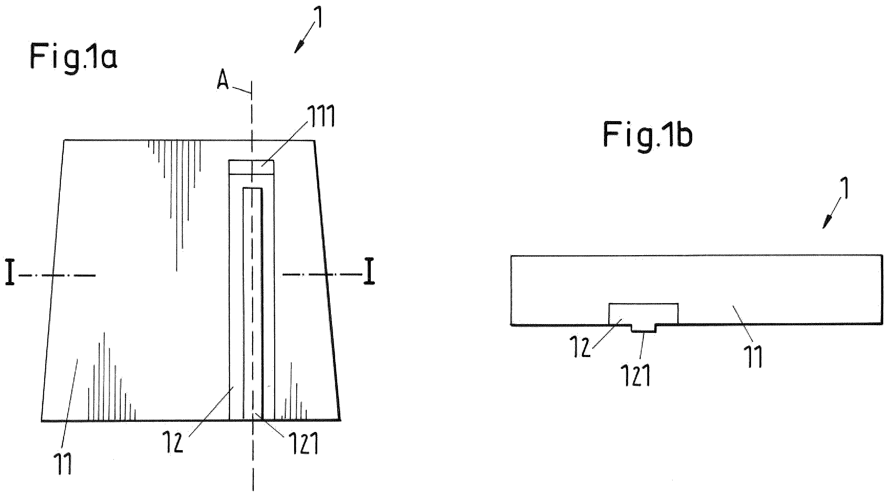

Es wird in den Figuren exemplarisch nur ein Ausführungsbeispiel gezeigt. Der Fachmann versteht jedoch ohne weiteres, auch ohne die explizite Darstellung in einer Zeichnung, wie in völlig analoger Weise weitere erfindungsgemässe Ausführungsbeispiele umgesetzt werden können. Anhand der Fig. 1a und Fig. 1b soll im Folgenden ein besonders bevorzugtes Ausführungsbeispiel eines erfindungsgemässen Lagersegments diskutiert werden, welches gesamthaft mit dem Bezugzeichen 1 bezeichnet ist.

Das erfindungsgemässe Lagersegment, das einen Segmentkörper 11 und ein Kippelement 12 umfasst, findet im Allgemeinen und insbesondere im speziellen Ausführungsbeispiel der Fig. 1a und Fig. 1b Verwendung als Lagersegment 1 an einem Trägerkörper (hier nicht dargestellt) einer Lageranordnung (hier nicht dargestellt) zur Aufnahme eines Axialschubs. Erfindungsgemäss ist ein Kippelement 12 in einer in eine radiale Richtung verlaufenden langgestreckten Vertiefung 111 des Segmentkörpers 11 derart vorgesehen, dass ein in Richtung der Vertiefung 111 verlaufender Kontaktkörper 121 des Kippelements 12 über eine Oberfläche des Segmentkörpers 11 hinausragt und der Segmentkörper 11 eine höhere Verformbarkeit als das Kippelement 12 hat.

Fig. 1b zeigt, analog zu Fig. 1a, den Querschnitt durch ein solches erfindungsgemässe Lagersegment 1, welches den Segmentkörper 11 mit Vertiefung 111 und in der Vertiefung 111 das Kippelement 12 mit Kontaktkörper 121 umfasst. Es ist deutlich zu sehen, wie der Kontaktkörper 121, über eine Oberfläche des Segmentkörpers 11 hinausragt und mit welchem das Kippelement 12 am Trägerkörper (hier nicht dargestellt) anordenbar ist.

Das erfindungsgemässe Lagersegment 1, das einen Segmentkörper 11 und ein Kippelement 12 umfasst, ist ein zweiteiliges Lagersegment 1 und hat somit gegenüber einem herkömmlichen Lagersegment 1 den Vorteil, dass es aufgrund des konstruktiven Aufbaus der Vertiefung 111 und des Kippelements 12 grössere Drucklasten aufnimmt und der Segmentkörper 11 eine höhere Verformbarkeit aufweist. Somit kann das in den Fig. 1 a und 1b gezeigte Ausführungsbeispiel besonders vorteilhaft an die Anforderungen einer Anwendung angepasst werden, indem die für den Segmentkörper 11 und Kippelement 12 die entsprechenden Materialien selektiert werden. Dadurch wird es möglich Lagersegmente 1 in einem einfachen konstruktiven Design auszuführen, mit bekannten effizienten Fertigungsverfahren herzustellen und gleichzeitig das Anwendungsspektrum von Lagersegmenten durch die Verwendung unterschiedlicher Materialien zu erweitern.

Fig. 1 a zeigt zusätzlich, dass der Kontaktkörper 121 derart ausgestaltet ist, dass das Lagersegment 1 in Verbindung mit dem Kontaktkörper 121 im Einbauzustand um eine Kippachse A beweglich an dem Trägerkörper (hier nicht dargestellt) anordenbar ist. Die Kippachse A ist hierbei in der radialen Richtung angeordnet, also in Richtung der Vertiefung 111, welche beispielsweise im Einbauzustand der radialen Richtung der Lagerachse (hier nicht dargestellt) entspricht.

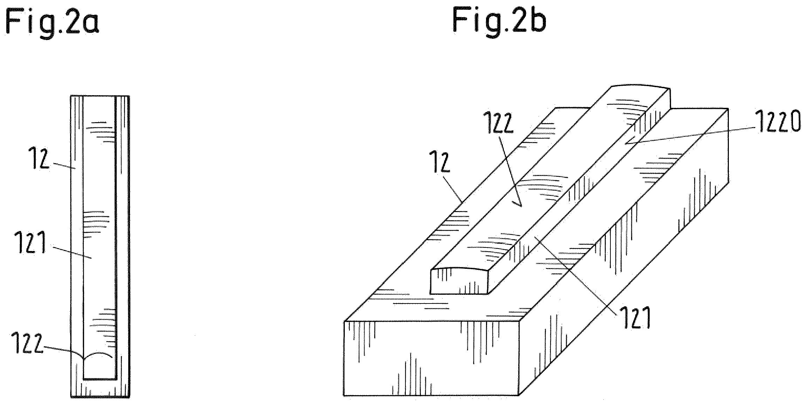

Das in den Fig. 2a und Fig. 2b schematisch dargestellte Ausführungsbeispiel zeigt erfindungsgemässe Kippelemente 12 aus der Draufsicht beziehungsweise in einer perspektivischer Darstellung. Das Kippelement 12 ist vorzugsweise aus Metall und in der Vertiefung (hier nicht dargestellt) angeordnet, sodass ein fliessen, also eine plastische Verformung des Kippelements 12, auch bei grossen Drucklasten ausgeschlossen werden kann. Ein besonders bevorzugtes Ausführungsbeispiel sieht dabei ein Lagersegment (hier nicht dargestellt) vor, dessen Segmentkörper (hier nicht dargestellt) eine höhere Verformbarkeit als das Kippelement 12 aus Metall hat, sodass ein zweiteiliges Lagersegment (siehe Fig. 1 a und Fig. 1b) hergestellt werden kann, das den Vorteil hat, dass dessen Kippelement 12 eine geringere Verformbarkeit aufweist, und einen Segmentkörper 11 dessen elastische Eigenschaften es ermöglichen zusätzlich Drucklast zu kompensieren.

Eine spezielle Massnahme besteht darin eine Kontaktfläche 122,1220 des Kontaktkörpers 121 zu beschichten, insbesondere keramisch zu beschichten. Der Reibungskoeffizient der Kontaktfläche 122,1220 des Kippelement 12 kann dadurch z.B. verkleinert werden, sodass der gesamte Kontaktkörper 121 geringere Verschleisserscheinungen und eine längere Lebensdauer aufweist.

Der Querschnitt des Kontaktkörpers 121 ist konvex gewölbt, insbesondere mehreckig, wie anhand des Ausführungsbeispiels in Fig. 2b zu sehen ist.

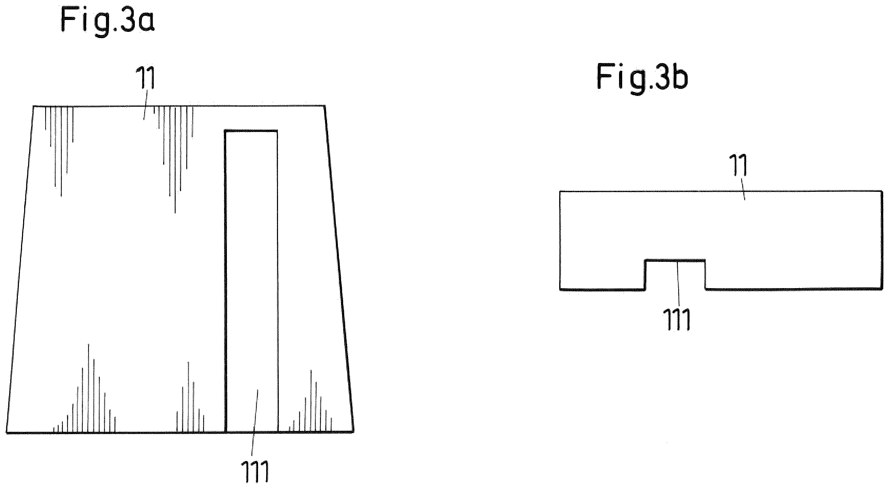

In den Fig. 3a und 3b ist ein Ausführungsbeispiel eines Segmentkörpers 11 mit der Vertiefung 111 dargestellt, wobei das Material, aus welchem der Segmentkörper 11 ist, hier ein faserverstärkter Verbundwerkstoff oder ein thermoplastischer Kunststoff, insbesondere ein Polyetherketon umfasst. Die genannten Materialien werden bevorzugt verwendet, da diese die bereits erwähnte höhere Verformbarkeit, also eine höhere Elastizität aufweisen und höhere Drucklasten kompensieren können.

Die Form des Querschnitts der Vertiefung 111 im Segmentkörper 11 ist bevorzugt mehreckig, insbesondere wie im vorliegenden Ausführungsbeispiel in den Fig. 3a und Fig. 3b dargestellt bevorzugt viereckig ausgebildet, wodurch das Kippelement (hier nicht dargestellt) die axialen Kräfte in der Vertiefung 111 auf eine grössere Fläche überträgt und somit die Drucklasten kleiner werden.

Das Kippelement (hier nicht dargestellt) wird in der Vertiefung (111) des Segmentkörpers (11) mit einem Befestigungsmittel, insbesondere mittels klippsen, kleben, rasten oder verschrauben, einpressen beziehungsweise verspannen befestigt.

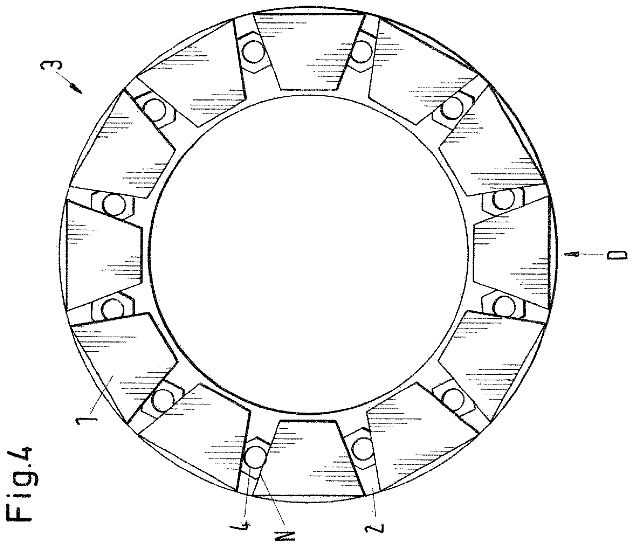

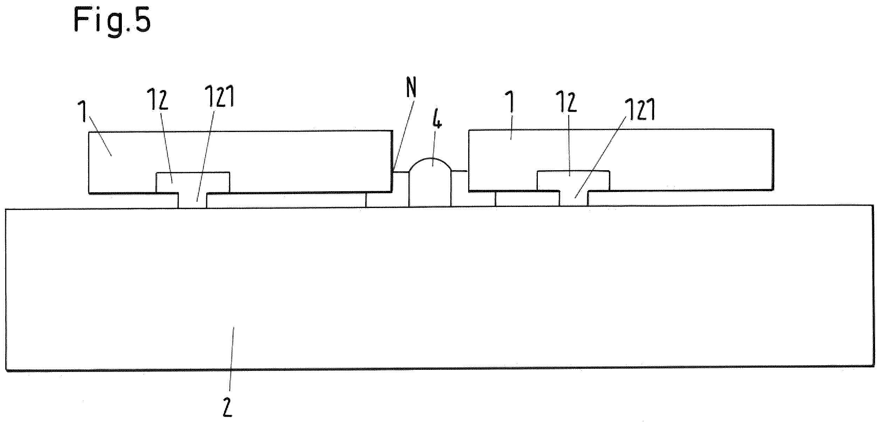

Fig. 4 zeigt einen erfindungsgemässen Trägerkörper einer Lageranordnung 3 zur Aufnahme eines Axialschubs mit einer Anordnung von Lagersegmenten 1. Die Lagersegmente 1 werden mittels eines Befestigungsmittels 4, beispielsweise eine Mutter, die das Lagersegment 1 in einer Nut N an einem äusseren Rand hält, am Trägerkörper 2 gehalten. In Fig. 5 ist ein Querschnitt durch einen erfindungsgemässen Trägerkörper 2 mit einer Anordnung von Lagersegmenten 1 dargestellt, wobei das gezeigte Ausführungsbeispiel im Wesentlichen dem in Fig. 4 gezeigten Ausführungsbeispiel entspricht.

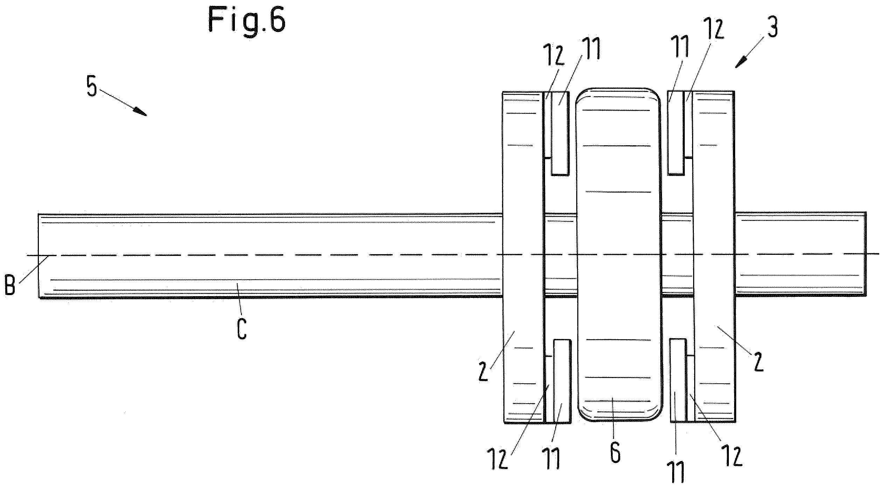

In Fig.6 ist eine schematische Darstellung eines Ausführungsbeispiels einer Pumpe mit einer Lageranordnung 3, einem Trägerkörper 2 und einem Lagersegment 1, wobei nur der die Erfindung betreffende Teil der Pumpe 5 dargestellt ist, eine Lageranordnung 3 mit Trägerkörpern 2 und Lagersegmenten 1. Insgesamt sind zwei Trägerkörper 2 einer Lageranordnung 3 derart angeordnet, sodass sich die Lagersegmente 1 gegenüberliegen. Zwischen den beiden Trägerkörpern 2 ist eine Spurscheibe 6 angeordnet, welches die Drucklast überträgt. Die Trägerkörper 2 sind für gewöhnlich um eine Lagerachse B einer Welle C angeordnet, insbesondere wie im vorliegenden Ausführungsbeispiel ringförmig angeordnet. Schematisch angedeutet ist auch die Mehrzahl von Lagersegmenten 1, die am Trägerkörper 2 angeordnet sind, wobei die Lagersegmente 1 im vorliegenden Ausführungsbeispiel ringartig angeordnet sind.

## Patentansprüche

1. Lagersegment, umfassend einen Segmentkörper (11) und ein Kippelement (12), für einen Trägerkörper (2) einer Lageranordnung (3) zur Aufnahme eines Axialschubs, **dadurch gekennzeichnet, dass** das Kippelement (12) in einer in eine radiale Richtung verlaufenden langgestreckten Vertiefung (111) des Segmentkörpers (11) derart vorgesehen ist, dass ein in Richtung der Vertiefung (111) verlaufender Kontaktkörper (121) des Kippelements (12) über eine Oberfläche des Segmentkörpers (11) hinausragt und der Segmentkörper (11) eine höhere Verformbarkeit als das Kippelement (12) hat, wobei das Material, aus welchem der Segmentkörper (11) ist, einen thermoplastischen Kunststoff umfasst.

2. Lagersegment nach Anspruch 1, wobei das Lagersegment (1), umfassend den Segmentkörper (11) und das Kippelement (12), ein zweiteiliges Lagersegment (1) ist.

3. Lagersegment nach einem der Ansprüche 1 oder 2, wobei das Kippelement (12) aus einem Metall ist.

4. Lagersegment nach einem der vorangehenden Ansprüche, wobei der Kontaktkörper (121) derart ausgestaltet ist, dass das Lagersegment (1) in Verbindung mit dem Kontaktkörper (121) im Einbauzustand um eine in Richtung der Vertiefung verlaufende Kippachse (A) beweglich an dem Trägerkörper (2) anordenbar ist.

5. Lagersegment nach einem der vorangehenden Ansprüche, wobei eine Kontaktfläche (122,1220) des Kontaktkörpers (121) beschichtet ist, insbesondere keramisch beschichtet ist.

6. Lagersegment nach einem der vorangehenden Ansprüche, wobei ein Querschnitt des Kontaktkörpers (121) konvex gewölbt, insbesondere mehreckig ist.

7. Lagersegment nach einem der vorangehenden Ansprüche, wobei das Material, aus welchem der Segmentkörper (11) ist, ein Polyetherketon umfasst.

8. Lagersegment nach einem der vorangehenden Ansprüche, wobei ein Querschnitt der Vertiefung (111) im Segmentkörper (11) mehreckig, insbesondere viereckig, ausgebildet ist.

9. Lagersegment nach einem der vorangehenden Ansprüche, wobei das Kippelement (12) in der Vertiefung (111) des Segmentkörpers (11) mit einem Befestigungsmittel befestigt ist.

10. Trägerkörper einer Lageranordnung (3) zur Aufnahme eines Axialschubs, wobei der Trägerkörper ein Lagersegment (1) nach einem der Ansprüche 1 bis 9 umfasst.

11. Trägerkörper nach Anspruch 10, wobei der Trägerkörper (2) um eine Lagerachse (B) anordenbar, insbesondere ringförmig anordenbar ist.

12. Trägerkörper nach Anspruch 10 oder 11, wobei eine Mehrzahl von Lagersegmenten (1) am Trägerkörper (2) angeordnet, insbesondere ringartig angeordnet ist.

13. Lageranordnung mit einem Trägerkörper (2) nach einem der Ansprüche 10-12 und einem Lagersegment (1) nach einem der Ansprüche 1-9

14. Pumpe mit einer Lageranordnung (3) nach Anspruch 13

## Claims

1. A bearing pad, including a pad body (11) and a tilting element (12), for a support body (2) of a bearing arrangement (3) for taking up an axial thrust, **characterized in that** the tilting element (12) is provided in an elongated recess (111) of the pad body (11) extending in a radial direction such that a contact body (121) of the tilting element (12) extending in the direction of the recess (111) projects beyond a surface of the pad body (11) and the pad body (11) has a higher deformability than the tilting element (12), wherein the material from which the pad body (11) is made comprises a thermoplastic.

2. A bearing pad in accordance with claim 1, wherein the bearing pad (1), including the pad body (11) and the tilting element (12), has a two-part bearing pad (1).

3. A bearing pad in accordance with one of the claims 1 or 2, wherein the tilting element (12) is of a metal.

4. A bearing pad in accordance with any one of the preceding claims, wherein the contact body (121) is designed such that the bearing pad (1) in connection with the contact body (121) can be movably arranged in the installed state about a tilting axis (A) at the support body (2).

5. A bearing pad in accordance with any one of the preceding claims, wherein a contact surface (122, 1220) of the contact body (121) is coated, in particular ceramically coated.

6. A bearing pad in accordance with any one of the preceding claims, wherein a cross-section of the contact body (121) is convexly arched, and is in particular polygonal.

7. A bearing pad in accordance with any one of the preceding claims, wherein the material from which the pad body (11) is made, comprises a polyetheretherketone.

8. A bearing pad in accordance with any one of the preceding claims, wherein a cross-section of the recess (111) in the pad body (11) is polygonal, in particular quadrangular.

9. A bearing pad in accordance with any one of the preceding claims, wherein the tilting element (12) is fastened in the recess (111) of the pad body (11) by a fastening means.

10. A support body of a bearing arrangement (3) for taking up an axial thrust, wherein the support body comprises a bearing pad (1) in accordance with any one of the claims 1 to 9.

11. A support body in accordance with claim 10, wherein the support body (2) can be arranged about a bearing axis (B), and can in particular be arranged in ring shape.

12. A support body in accordance with claim 10 or claim 11, wherein a plurality of bearing pads (1) are arranged at the support body (2), and are in particular arranged in ring shape.

13. A bearing arrangement having a support body (2) in accordance with any one of the claims 11 to 13 and having a bearing pad (1) in accordance with any one of the claims 1 to 9.

14. A pump having a bearing arrangement (3) in accordance with claim 13.

## Revendications

1. Un segment de palier, comprenant un corps de segment (11) et un élément de basculement (12) pour un corps de support (2) d'un agencement de palier (3) pour recevoir une poussée axiale, **caractérisé en ce que** l'élément de basculement (12) est prévu dans une cavité (111) allongée du corps de segment (11) s'étendant dans une direction radiale telle, qu'un corps de contact (121) d'élément de basculement (12) s'étendant dans la direction de la cavité (111) dépasse une surface du corps de segment (11) et le corps de segment (11) a une déformabilité plus élevée que l'élément de basculement (12), dans lequel le matériau constituant le corps de segment (11) comprend une résine thermoplastique.

2. Un segment de palier selon la revendication 1, dans lequel le segment de palier (1), comprenant le corps de segment (11) et l'élément de basculement (12), est un segment de palier (1) en deux parties.

3. Un segment de palier selon l'une des revendications 1 ou 2, dans lequel l'élément de basculement (12) est fait d'un métal.

4. Un segment de palier selon l'une des revendications précédentes, dans lequel le corps de contact (121) est conçu de telle sorte que le segment de palier (1) en liaison avec le corps de contact (121) à l'état monté peut être disposé de manière mobile sur le corps de support (2) autour d'un axe de basculement (A) s'étendant dans direction de la cavité.

5. Un segment de palier selon l'une des revendications précédentes, dans lequel une surface de contact (122, 1220) du corps de contact (121) est revêtue, en particulier revêtue de matière céramique.

6. Un segment de palier selon l'une des revendications précédentes, dans lequel une section transversale du corps de contact (121) est incurvée convexe, en particulier étant polygonale.

7. Un segment de palier selon l'une des revendications précédentes, dans lequel le matériau constituant le corps de segment (11) comprend un polyéther-cétone.

8. Un segment de palier selon l'une des revendications précédentes, dans lequel une section transversale de la cavité (111) dans le corps de segment (11) est polygonale, en particulier quadrangulaire.

9. Un segment de palier selon l'une des revendications précédentes, dans lequel l'élément de basculement (12) est fixé avec un moyen de fixation dans la cavité (111) du corps de segment (11).

10. Un corps de support d'un agencement de palier (3) pour recevoir une poussée axiale, dans lequel le corps de support comprend un segment de palier (1) selon l'une des revendications 1 à 9.

11. Un corps de support selon la revendication 10, dans lequel le corps de support (2) peut être disposé autour d'un axe de palier (B), en particulier sous forme annulaire.

12. Un corps de support selon la revendication 10 ou 11, dans lequel une pluralité de segments de palier (1) est disposée sur le corps de support (2), en particulier sous forme annulaire.

13. Un agencement de palier avec un corps de support (2) selon l'une des revendications 10 à 12 et avec un segment de palier (1) selon l'une des revendications 1 à 9.

14. Une pompe avec un agencement de palier (3) selon la revendication 13.
